# FASCICULE DE BREVET EUROPEEN

(11) **EP 3 625 456 B1**
(45) Date de publication et mention de la délivrance du brevet: **17.04.2024**
(21) Numéro de dépôt: 18724884.4
(22) Date de dépôt: 16.05.2018
(51) Int. Cl.: F03H 1/00, B64G 1/40

(54) **DISPOSITIF DE REGULATION DE DEBIT DE FLUIDE PROPULSIF POUR PROPULSEUR ELECTRIQUE**
VORRICHTUNG ZUR REGELUNG DER DURCHFLUSSMENGE EINER TREIBFLÜSSIGKEIT FÜR EIN ELEKTRISCHES TRIEBWERK
DEVICE FOR REGULATING THE RATE OF FLOW OF PROPELLANT FLUID FOR AN ELECTRIC THRUSTER

(30) Priorité: 16.05.2017 FR 1754314
(43) Date de publication de la demande: 25.03.2020
(73) Titulaire: Safran Spacecraft Propulsion, 27200 Vernon (FR); Centre National d'Etudes Spatiales, 75001 Paris (FR)
(72) Inventeur: DIOME, Mathieu, 77550 Moissy-Cramayel (FR)
(74) Mandataire: Gevers & Orès
(86) Numéro de dépôt international: PCT/EP2018/062724
(87) Numéro de publication internationale: WO 2018/210929

(56) Documents cités:
- EP-A1- 0 781 921
- WO-A1-2015/086982
- WO-A1-2018/096236
- G Matticari ET AL: "New generation Propellant Flow Control components for Electric Propulsion systems: Status of achievements at Alcatel Alenia Space Italia/Laben-Proel; IEPC-2005-23", , 31 octobre 2005 (2005-10-31), XP055445829, Extrait de l'Internet: URL:http://erps.spacegrant.org/uploads/ima ges/images/iepc_articledownload_1988-2007/ 2005index/023.pdf [extrait le 2018-01-30]
- Anonymous: "Nickel Alloys", , 5 mai 2017 (2017-05-05), XP055445824, Extrait de l'Internet: URL:https://web.archive.org/web/2017050509 0255/http://www.nickel-alloys.net/nickelal loys.html [extrait le 2018-01-30]
- "Product Handbook of High-Performance Alloys", INTERNET CITATION, 2 juillet 2007 (2007-07-02), XP002440366, Extrait de l'Internet: URL:http://www.specialmetals.com/documents /Product%20Handbook%20Part%201.pdf [extrait le 2007-07-02]

## Description

### DOMAINE TECHNIQUE

Le domaine de la présente invention est celui de la régulation de débits de fluide, et en particulier la régulation de très petits débits tels que les débits d'alimentation en gaz propulsif de propulseurs électriques spatiaux.

L'invention s'applique de façon privilégiée mais non limitative à un moteur à propulsion ionique ou plasmique du type de ceux utilisés pour la propulsion électrique spatiale, en particulier pour la propulsion de satellites géostationnaires de télécommunication.

### ETAT DE L'ART

L'état de la technique comprend notamment le document référencé XP055445829 (« New génération Propellant Flow Control components for Electric Propulsion systems : Status of achievements at Alcatel Alesia space Italia/Laben-Proel ; IEPC-2005-23 » de G.Matticari et al.) publié le 31 octobre 2005, et le document WO-A1-2015/086982.

L'état de la technique au titre de l'article 54(3) de la CBE, comprend notamment le document WO-A1-2018096236.

Dans le cadre de l'utilisation d'un moteur à propulsion électrique, il y est nécessaire d'y associer un contrôleur de débit. Etant donné les faibles débits mis en jeu, un moyen connu par la personne du métier pour la régulation d'un tel débit est le dispositif connu comme « thermo-capillaire », c'est-à-dire un conduit capillaire électriquement conducteur pouvant être connecté à une source de courant électrique. Un tel courant électrique traversant le conduit capillaire va provoquer un réchauffement de celui-ci par effet Joule, réchauffement qui va modifier les conditions d'écoulement du fluide dans le conduit capillaire, et donc le débit massique de fluide traversant le conduit capillaire pour une pression d'alimentation déterminée.

Par ailleurs, le besoin en puissance des moteurs plasmiques évolue, que ce soit vers des puissances plus élevées ou des puissances plus faibles. Le contrôleur de débit doit donc être dimensionné pour fournir des débits plus forts ou plus faibles, tout en permettant au propulseur plasmique de ne pas fonctionner sur un unique point de fonctionnement mais d'offrir à celui-ci une réelle gamme de points de fonctionnement. Autrement dit, le contrôleur de débit doit être capable de fournir une gamme de débit élargie par rapport à l'état de l'art.

Le problème qui se pose est que la technologie actuellement utilisée présente une limite d'utilisation qui ne permet pas de répondre à ce besoin. La technologie du contrôleur de débit doit donc être adaptée pour permettre de répondre au besoin grandissant d'une gamme de débit élargie.

Les difficultés liées à une telle mise en oeuvre sont diverses. Le conduit capillaire doit être robuste aux hautes températures. En effet, étant donné les faibles dimensions d'un tel tube, la résistivité de ce tube est élevée, et l'effet Joule engendre des températures pouvant avoisiner les 1000°C. De plus, plus la gamme de débit se veut grande, plus il est nécessaire de recourir à des températures élevées. Par ailleurs, afin de maîtriser l'encombrement par rapport à une enveloppe dimensionnelle donnée, et afin de maîtriser les pertes de charge dans ce tube, il est nécessaire, outre la fabrication du tube en lui-même qui est un enjeu étant donné les faibles dimensions (plusieurs centaines de micromètres pour le diamètre), de pouvoir mettre en forme le conduit capillaire : cette opération est appelée le cintrage, et est généralement réalisée à température ambiante pour des facilités de mise en oeuvre. Enfin, il est également nécessaire de pouvoir intégrer le tube capillaire au sein d'une structure par un procédé d'assemblage (par exemple par brasage ou soudage).

Le conduit capillaire est aujourd'hui généralement réalisé à partir d'un acier inoxydable, par exemple l'acier X2CrNi18-10. Ce matériau présente la particularité d'être relativement ductile à 20°C, ce qui facilite sa mise en oeuvre lors du cintrage. De plus, ce matériau peut être brasé facilement sur d'autres pièces, ce qui rend son intégration au sein d'une structure abordable. L'inconvénient est que ce matériau se dégrade, entraînant ainsi une modification des conditions d'écoulement au sein du tube capillaire, ce qui implique la diminution du débit maximum de gaz (obtenu à courant nul). En effet, le conduit capillaire se dégrade lorsqu'il est soumis durant plusieurs heures à un courant de quelques ampères (de 3 à 4 A). Or, pour obtenir une gamme de débit convenable, un contrôleur de débit établit ses performances sur un courant électrique pouvant varier de 0 à 4 A (0 A correspondant au débit maximum, 4 A correspondant au débit minimum). La dégradation du tube capillaire, pouvant provoquer jusqu'à la rupture du tube et ainsi laisser fuir toute quantité de xénon, se traduit généralement par une diminution de la section fluidique au sein du tube. En conséquence, le débit maximum atteint à 0 A se trouve impacté par l'application préliminaire d'un courant de plus forte intensité. La gamme de débit du contrôleur est alors réduite d'au moins 10%. Une alternative serait de limiter le courant du thermo-capillaire entre 0 et 2 A par exemple. Cette alternative présente le défaut de diminuer la gamme de débit du contrôleur d'environ 40%, ce qui est fortement pénalisant pour les performances d'un propulseur plasmique.

La présente invention vise à remédier à ces inconvénients, en proposant un dispositif de régulation de débit de fluide propulsif pour propulseur électrique, muni d'un conduit capillaire robuste qui permette de fournir une gamme de débit de fluide propulsif élargie, tout en maîtrisant les dimensions du conduit thermo-capillaire.

### EXPOSE DE L'INVENTION

L'invention a ainsi pour objet un dispositif de régulation de débit de fluide propulsif pour propulseur électrique, du type dispositif thermo-capillaire comprenant au moins un conduit capillaire électriquement conducteur et apte à réguler le débit de fluide propulsif sous l'action d'une modification de température du conduit, ledit au moins un conduit capillaire étant connecté à une source de courant électrique de telle sorte qu'un tel courant électrique traversant le conduit capillaire provoque un réchauffement du conduit capillaire par effet Joule.

Dans le dispositif selon l'invention, ledit au moins un conduit capillaire comprend un alliage à base de nickel.

La demanderesse a constaté que l'emploi de cet alliage pour le conduit capillaire permettait notamment d'élargir l'intervalle de débit en gaz propulsif, tout en maîtrisant le dimensionnement du conduit et sa mise en forme.

Par alliage à base de nickel, on entend un alliage qui comprend au moins 50% en poids de nickel.

De préférence, ledit au moins un conduit capillaire est constitué d'un alliage à base de nickel, c'est-à-dire que le conduit ne comprend que ledit alliage.

L'alliage à base de nickel peut comprendre au moins un élément choisi parmi le chrome, le fer, le manganèse, le cuivre, le niobium et le molybdène.

En particulier, l'alliage à base de nickel peut par exemple comprendre du fer. La teneur en fer peut être inférieure ou égale à 10% du poids de l'alliage.

L'alliage à base de nickel peut comprendre du fer et du chrome.

De préférence, l'alliage à base de nickel est choisi parmi a) un alliage comprenant au moins 72% en poids de nickel, de 14 à 17% en poids de chrome et de 6 à 10% en poids de fer, b) un alliage comprenant au moins 58% en poids de nickel, de 20 à 23% en poids de chrome et une teneur en fer inférieure ou égale à 5% en poids, et c) un alliage comprenant de 50 à 55% en poids de nickel et de 17 à 21% en poids de chrome.

L'alliage à base de nickel peut être choisi parmi les alliages commercialisés sous la dénomination Inconel^{®} par la société Spécial Metals Corporation, et notamment parmi les alliages Inconel^{®} 600, Inconel^{®} 625, et Inconel^{®} 718.

Il peut également être choisi parmi l'alliage commercialisé sous la dénomination RA 602 CA^{®} par la société Rolled Alloys, l'alliage commercialisé sous la dénomination HAYNES^{®} 214^{®} par la société Haynes International, ainsi que l'alliage commercialisé sous la dénomination HAYNES^{®} 230^{®} par la société Haynes International.

L'alliage RA 602 CA^{®} est un alliage comprenant, en pourcentage en poids, de 24 à 26% de chrome, de 0,15 à 0,25% de carbone, de 1,8 à 2,4% d'aluminium, de 0,1 à 0,2% de titane, de 0,05 à 0,12% d'yttrium, de 0,01 à 0,10% de zirconium, au plus 0,15% de manganèse, au plus 0,5% de silicium, au plus 0,1 % de cuivre, de 8 à 11 % de fer, le reste étant du nickel.

L'alliage HAYNES^{®} 214^{®} est un alliage comprenant, en pourcentage en poids, 16% de chrome, 4,5% d'aluminium, 3% de fer, au plus 2% de cobalt, au plus 0,5% de manganèse, au plus 0,5% de molybdène, au plus 0,5% de titane, au plus 0,5% de tungstène, au plus 0,15% de niobium, au plus 0,2% de silicium, au plus 0,1% de zirconium, 0,04% de carbone, au plus 0,01% de bore, 0,01% d'yttrium, le reste étant du nickel.

L'alliage HAYNES^{®} 230^{®} est un alliage comprenant, en pourcentage en poids, 22% de chrome, 14% de tungstène, 2% de molybdène, au plus 3% de fer, au plus 5% de cobalt, 0,5% de manganèse, 0,4% de silicium, au plus 0,5% de niobium, 0,3% d'aluminium, au plus 0,1% de titane, 0,1% de carbone, 0,02% de lanthane, au plus 0,015% de bore, le reste étant du nickel.

Le fluide propulsif peut être du xénon ou du krypton.

L'invention a également pour objet un propulseur électrique. Le propulseur électrique selon l'invention comprend un dispositif décrit ci-dessus.

Le propulseur électrique est typiquement un propulseur plasmique à effet Hall.

L'invention a enfin pour objet un satellite. Le satellite selon l'invention comprend un propulseur électrique décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1, illustre un propulseur spatial électrique selon l'invention, et
- la figure 2 illustre un système d'alimentation en gaz propulsif du propulseur.

### DESCRIPTION DETAILLEE

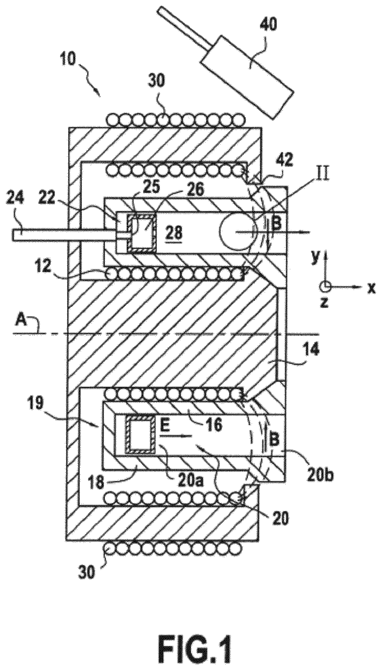

La figure 1 illustre de façon générale un propulseur plasmique à effet Hall 10. Un bobinage magnétique central 12 entoure un noyau central 14 s'étendant selon un axe principal longitudinal A. Une paroi interne annulaire 16 encercle le bobinage central 12. Cette paroi interne 16 est entourée par une paroi annulaire externe 18, les parois annulaires 16 et 18 délimitant un canal de décharge annulaire 20 s'étendant autour de l'axe principal A. Dans l'exemple décrit ici, la paroi interne 16 et la paroi externe 18 font partie d'une unique pièce en céramique 19.

Dans la suite de la description, le terme "interne" désigne une partie proche de l'axe principal A et le terme "externe" une partie éloignée de cet axe.

Egalement, les termes "amont" et "aval" sont définis par rapport au sens d'écoulement normal du gaz (de l'amont vers l'aval) à travers le canal de décharge 20.

L'extrémité amont 20a du canal de décharge 20 (à gauche sur la figure 1) est refermée par un système d'injection 22 composé d'une canalisation 24 d'amenée du gaz ionisable (en général du xénon), la canalisation 24 étant reliée par un trou d'alimentation 25 à une anode 26 servant de distributeur pour l'injection des molécules de gaz dans le canal de décharge 20.

L'extrémité aval 20b du canal de décharge 20 est ouverte (à droite sur la figure 1).

Plusieurs bobinages magnétiques périphériques 30 présentant un axe parallèle à l'axe principal A sont disposés tout autour de la paroi externe 18. Le bobinage magnétique central 12 et les bobinages magnétiques externes permettent de générer un champ magnétique radial B dont l'intensité est maximale au niveau de l'extrémité aval 20b du canal de décharge 20.

Une cathode creuse 40 est disposée à l'extérieur des bobinages périphériques 30, sa sortie étant orientée afin d'éjecter des électrons en direction de l'axe principal A et de la zone située en aval de l'extrémité aval 20b du canal de décharge 20. Il est établi une différence de potentiel entre la cathode 40 et l'anode 26.

Les électrons ainsi éjectés sont en partie dirigés à l'intérieur du canal de décharge 20. Certains de ces électrons parviennent, sous l'influence du champ électrique généré entre la cathode 40 et l'anode 26 jusqu'à l'anode 26, tandis que la majorité d'entre eux sont piégés par le champ magnétique B intense au voisinage de l'extrémité aval 20b du canal de décharge 20.

Les molécules de gaz circulant de l'amont vers l'aval dans le canal de décharge 20 sont ionisées par les électrons avec lesquels elles entrent en collision.

Par ailleurs, les électrons présents dans le canal de décharge 20 créent un champ électrique E axial qui accélère les ions entre l'anode 26 et la sortie aval 20b du canal de décharge 20 de telle sorte que ces ions sont éjectés à grande vitesse du canal de décharge 20, ce qui engendre la propulsion du moteur.

L'invention vise plus particulièrement le système d'alimentation du propulseur électrique.

De façon préliminaire, il faut noter que les propulseurs actuels ont besoin d'un faible débit de gaz régulé pour obtenir une poussée constante. Ce débit est créé à partir d'un réservoir et d'un régulateur de pression qui amène la pression dans un domaine constant, le débit étant ensuite régulé pour fournir la quantité de gaz nécessaire au moteur et à la cathode creuse. Cette régulation est usuellement faite par un tube thermo-capillaire alimenté en courant et par des restricteurs de débit permettant une répartition du fluide propulsif entre l'anode et la cathode.

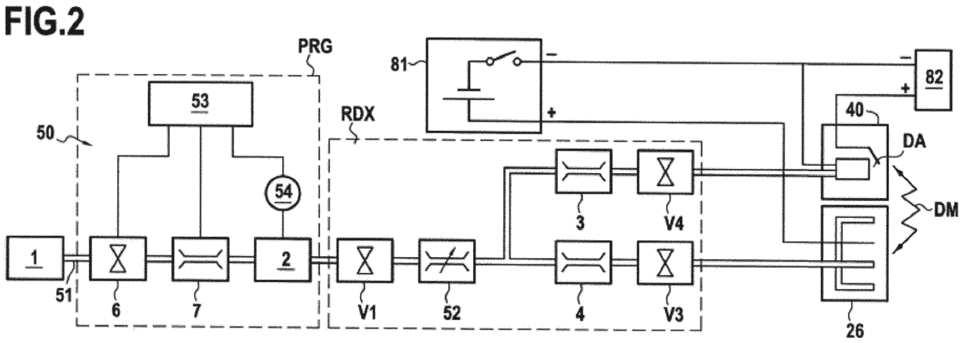

La figure 2 illustre un système d'alimentation 50 du propulseur électrique 10 conforme à l'invention.

Ce système d'alimentation 50 comporte un réservoir haute pression 1 de gaz ionisable, par exemple de xénon ou de krypton, relié, par une canalisation 51, à un réservoir tampon basse pression 2.

Le volume du réservoir tampon basse pression 2 est de 1 litre environ. La pression dans le réservoir haute pression 1 varie de 150 bars à 1 bar environ ; celle dans le réservoir tampon basse pression 2 varie entre 1,5 et 3 bar environ.

Un restricteur 7 est placé sur la canalisation 51 pour détendre la pression entre le réservoir haute pression 1 et le réservoir tampon basse pression 2.

La canalisation 51 comporte également une vanne de régulation 6 du débit de gaz entre le réservoir haute pression 1 et le réservoir tampon basse pression 2.

Le système d'alimentation 50 comporte des moyens 53 pour contrôler l'ouverture et la fermeture de la vanne de régulation 6 et mesurer la pression dans le réservoir tampon basse pression 2 en coopération avec un capteur de pression 54.

Le système d'alimentation 50 comporte, en aval du réservoir tampon basse pression 2, deux vannes d'arrêt V3, V4 une vanne d'arrêt redondante V1 et un thermo-capillaire 52 permettant un réglage fin du débit de gaz vers l'anode 26 et la cathode 40 respectivement. D'autres structures sont possibles, on peut par exemple envisager que la vanne V1 soit redondée et que les vannes V3 et V4 soient absentes.

Des restricteurs 3 et 4 respectivement associés à la cathode 40 et à l'anode 26 permettent de répartir le débit de gaz entre la cathode et l'anode, à savoir environ 8 à 10% vers la cathode et 90 à 92% vers l'anode.

Le système d'alimentation 50 comporte aussi une électronique de puissance 81 apte à mettre le moteur sous tension et une électronique d'allumage 82 apte à établir un courant de décharge entre l'anode 26 et la cathode 40. Un logiciel de pilotage permet le séquençage de l'allumage du moteur et le contrôle des vannes pour fournir le gaz et l'électricité au propulseur selon un enchaînement déterminé.

Sur la figure 2 on a référencé DA la décharge d'allumage, nécessaire au démarrage uniquement, et DM la décharge moteur établie entre l'anode 26 et la cathode 40. On notera que dans le cas d'un moteur plasma à effet Hall, l'électronique 81, 82 précitée est souvent éloignée du propulseur, une unité de filtrage étant utilisée entre le moteur et l'électronique de puissance pour éviter les perturbations électromagnétiques. L'électronique 81 alimente également le thermo-capillaire 52, ainsi que les vannes V1, V3 et V4.

De façon usuelle, le sous-système constitué par la vanne de régulation 6, le restricteur 7, le réservoir tampon basse pression 2, les moyens 53 pour contrôler l'ouverture et la fermeture de la vanne de régulation 6 et le capteur de pression 54 constitue une unité de régulation de pression PRG.

De même, la vanne d'arrêt V1, le thermo-capillaire 52, les restricteurs 3, 4, et les vannes V3, V4, constituent une unité RDX de régulation du débit en gaz ionisant.

Le gaz circule dans un tube fin, appelé tube capillaire. En appliquant un courant électrique sur le tube capillaire, celui-ci est alors chauffé par effet Joule. Le tube étant chauffé, la viscosité du gaz qui y circule s'en trouve modifiée et dès lors que les conditions d'écoulement du gaz dans le tube sont également modifiées, de sorte qu'il est possible d'ajuster le débit souhaité en fonction du courant électrique appliqué sur le tube.

L'unité RDX de régulation du débit doit normalement être apte à réguler un débit massique d'alimentation en gaz propulsif très faible, de l'ordre de quelques mg/s. C'est pour cela qu'on utilise de façon connue le thermo-capillaire 52, dans lequel le gaz traverse un conduit capillaire connecté à une source de courant pour réguler le débit de gaz en chauffant le conduit capillaire par effet Joule. En pratique, toutefois, les dispositifs de régulation de débit de l'état de la technique ne permettent de faire varier le débit que sur des plages assez étroites, surtout quand la pression d'alimentation est constante. Ainsi, le dispositif de régulation de débit utilisé dans le propulseur à effet Hall commercialisé sous la dénomination PPS^{®}1350, avec une pression d'alimentation en xénon de 265 kPa, ne peut faire varier le débit que sur une plage de 4 à 8 mg/s. Bien que ceci soit suffisant pour ce propulseur à effet Hall existant, qui est optimisé pour un point de fonctionnement unique, à 1,5 kW de puissance et 350 V de tension électrique entre l'anode et la cathode, c'est nettement insuffisant pour des propulseurs électrostatiques envisagés pour un fonctionnement sur des larges plages de puissance et poussée, et nécessitant donc la régulation de débits de gaz propulsif pouvant varier, par exemple, entre 10 et 17 mg/s ou même entre 17 et 50 mg/s.

Conformément à l'invention, on résout ce problème en utilisant pour le thermo-capillaire 52 un conduit capillaire comprenant un alliage à base de nickel. On utilise plus particulièrement les alliages commercialisés sous la dénomination Inconel^{®} par la société Special Metals Corporation, et notamment parmi les alliages Inconel^{®} 600, Inconel^{®} 625, et Inconel^{®} 718.

L'alliage Inconel^{®} 600 est un alliage comprenant, en pourcentage en poids, au moins 72% de nickel, de 14 à 17% de chrome, de 6 à 10% de fer, au plus 1% de manganèse, au plus 0,5% de cuivre, au plus 0,5% de silicium, au plus 0,15% de carbone et au plus 0,015% de soufre.

L'alliage Inconel^{®} 625 est un alliage comprenant, en pourcentage en poids, au moins 58% de nickel, de 20 à 23% de chrome, au plus 5% de fer, de 8 à 10% de molybdène, de 3,15 à 4,15% de niobium, au plus 1% de cobalt, au plus 0,5% de manganèse, au plus 0,4% d'aluminium, au plus 0,4% de titane, au plus 0,5% de silicium, au plus 0,1% de carbone, au plus 0,015% de soufre et au plus 0,015% de phosphore.

L'alliage Inconel^{®} 718 est un alliage comprenant, en pourcentage en poids, de 50 à 55% de nickel, de 17 à 21% de chrome, de 2,8 à 3,3% de molybdène, de 4,75 à 5,5% de niobium, au plus 1% de cobalt, au plus 0,35% de manganèse, au plus 0,3% de cuivre, de 0,2 à 0,8% d'aluminium, de 0,65 à 1,15% de titane, au plus 0,35% de silicium, au plus 0,08% de carbone, au plus 0,015% de soufre, au plus 0,015% de phosphore et au plus 0,006% de bore, le reste pouvant être du fer.

On peut également utiliser en tant qu'alliage de nickel l'alliage commercialisé sous la dénomination RA 602 CA^{®} par la société Rolled Alloys, l'alliage commercialisé sous la dénomination HAYNES^{®} 214^{®} par la société Haynes International, ainsi que l'alliage commercialisé sous la dénomination HAYNES^{®} 230^{®} par la société Haynes International.

L'alliage RA 602 CA^{®} est un alliage comprenant, en pourcentage en poids, de 24 à 26% de chrome, de 0,15 à 0,25% de carbone, de 1,8 à 2,4% d'aluminium, de 0,1 à 0,2% de titane, de 0,05 à 0,12% d'yttrium, de 0,01 à 0,10% de zirconium, au plus 0,15% de manganèse, au plus 0,5% de silicium, au plus 0,1 % de cuivre, de 8 à 11% de fer, le reste étant du nickel.

L'alliage HAYNES^{®} 214^{®} est un alliage comprenant, en pourcentage en poids, 16% de chrome, 4,5% d'aluminium, 3% de fer, au plus 2% de cobalt, au plus 0,5% de manganèse, au plus 0,5% de molybdène, au plus 0,5% de titane, au plus 0,5% de tungstène, au plus 0,15% de niobium, au plus 0,2% de silicium, au plus 0,1% de zirconium, 0,04% de carbone, au plus 0,01% de bore, 0,01% d'yttrium, le reste étant du nickel.

L'alliage HAYNES^{®} 230^{®} est un alliage comprenant, en pourcentage en poids, 22% de chrome, 14% de tungstène, 2% de molybdène, au plus 3% de fer, au plus 5% de cobalt, 0,5% de manganèse, 0,4% de silicium, au plus 0,5% de niobium, 0,3% d'aluminium, au plus 0,1% de titane, 0,1% de carbone, 0,02% de lanthane, au plus 0,015% de bore, le reste étant du nickel.

Changer de matériau pour le conduit capillaire implique de changer tous les paramètres physiques intrinsèques à ce dernier, et notamment les propriétés thermiques et électriques. En effet, il n'était pas évident que le couplage de ces propriétés permette de répondre aux contraintes opérationnelles du thermo-capillaire sans impacter significativement sa définition actuelle. Or, il est montré que les alliages à base de nickel, en particulier les alliages Inconel^{®} mentionnés ci-dessus, permettent d'assurer la fonction du thermo-capillaire avec aisance sur une gamme étendue de débit de fluide propulsif. Ces alliages permettent de résoudre la problématique liée à la limitation thermique, tout en restant compatible avec les contraintes dimensionnelles et d'intégration des contrôleurs de débit existants. En particulier, ces alliages permettent de s'affranchir des mécanismes de dégradation révélés à haute température sur les conduits capillaires en acier inoxydable. Ces mécanismes de dégradation comprennent l'oxydation du tube capillaire, les ségrégations différentielles du chrome et du nickel au sein du matériau, de part et d'autre de la paroi du tube, ainsi que la précipitation de carbures de chrome.

## Revendications

1. Dispositif (52) de régulation de débit de fluide propulsif pour propulseur électrique, du type dispositif thermo-capillaire comprenant au moins un conduit capillaire électriquement conducteur et apte à réguler le débit de fluide propulsif sous l'action d'une modification de température du conduit, ledit au moins un conduit capillaire étant connecté à une source de courant électrique de telle sorte qu'un tel courant électrique traversant le conduit capillaire provoque un réchauffement du conduit capillaire par effet Joule, ledit au moins un conduit capillaire comprenant un alliage à base de nickel.

2. Dispositif (52) selon la revendication 1, **caractérisé en ce que** ledit au moins un conduit capillaire est constitué d'un alliage à base de nickel.

3. Dispositif (52) selon la revendication 1 ou 2, **caractérisé en ce que** l'alliage à base de nickel comprend au moins un élément choisi parmi le chrome, le fer, le manganèse, le cuivre, le niobium et le molybdène.

4. Dispositif (52) selon la revendication 3, **caractérisé en ce que** l'alliage à base de nickel comprend du fer.

5. Dispositif (52) selon la revendication 4, caractérisé en ce la teneur en fer est inférieure ou égale à 10% du poids de l'alliage.

6. Dispositif (52) selon la revendication 4 ou 5, **caractérisé en ce que** l'alliage à base de nickel comprend du fer et du chrome.

7. Dispositif (52) selon la revendication 6, **caractérisé en ce que** l'alliage à base de nickel est choisi parmi a) un alliage comprenant au moins 72% en poids de nickel, de 14 à 17% en poids de chrome et de 6 à 10% en poids de fer, b) un alliage comprenant au moins 58% en poids de nickel, de 20 à 23% en poids de chrome et une teneur en fer inférieure ou égale à 5% en poids, et c) un alliage comprenant de 50 à 55% en poids de nickel et de 17 à 21% en poids de chrome.

8. Dispositif (52) selon l'une des revendications 1 à 4, **caractérisé en ce que** l'alliage à base de nickel comprend, en pourcentage en poids, de 24 à 26% de chrome, de 0,15 à 0,25% de carbone, de 1,8 à 2,4% d'aluminium, de 0,1 à 0,2% de titane, de 0,05 à 0,12% d'yttrium, de 0,01 à 0,10% de zirconium, au plus 0,15% de manganèse, au plus 0,5% de silicium, au plus 0,1% de cuivre, de 8 à 11% de fer, le reste étant du nickel.

9. Dispositif (52) selon l'une des revendications 1 à 4, **caractérisé en ce que** l'alliage à base de nickel comprend, en pourcentage en poids, 16% de chrome, 4,5% d'aluminium, 3% de fer, au plus 2% de cobalt, au plus 0,5% de manganèse, au plus 0,5% de molybdène, au plus 0,5% de titane, au plus 0,5% de tungstène, au plus 0,15% de niobium, au plus 0,2% de silicium, au plus 0,1% de zirconium, 0,04% de carbone, au plus 0,01% de bore, 0,01% d'yttrium, le reste étant du nickel.

10. Dispositif (52) selon l'une des revendications 1 à 4, **caractérisé en ce que** l'alliage à base de nickel comprend, en pourcentage en poids, 22% de chrome, 14% de tungstène, 2% de molybdène, au plus 3% de fer, au plus 5% de cobalt, 0,5% de manganèse, 0,4% de silicium, au plus 0,5% de niobium, 0,3% d'aluminium, au plus 0,1% de titane, 0,1% de carbone, 0,02% de lanthane, au plus 0,015% de bore, le reste étant du nickel.

11. Propulseur électrique (10), **caractérisé en ce qu'**il comprend un dispositif (52) selon l'une des revendications 1 à 10.

12. Propulseur électrique (10) selon la revendication 11, **caractérisé en ce qu'**il est un propulseur plasmique à effet Hall.

13. Satellite, **caractérisé en ce qu'**il comprend un propulseur électrique (10) selon la revendication 11 ou 12.

## Patentansprüche

1. Vorrichtung (52) zur Regelung des Durchflusses von Treibflüssigkeit für ein elektrisches Triebwerk vom Typ einer thermo-kapillaren Vorrichtung, die mindestens eine elektrisch leitfähige Kapillarleitung umfasst und in der Lage ist, den Durchfluss von Treibflüssigkeit unter der Wirkung einer Temperaturänderung der Leitung zu regeln, wobei die mindestens eine Kapillarleitung derart mit einer elektrischen Stromquelle verbunden ist, dass ein solcher durch die Kapillarleitung fließender elektrischer Strom eine Erwärmung der Kapillarleitung durch Joule-Effekt bewirkt, wobei die mindestens eine Kapillarleitung eine Legierung auf Nickelbasis umfasst.

2. Vorrichtung (52) nach Anspruch 1, **dadurch gekennzeichnet, dass** die mindestens eine Kapillarleitung aus einer Legierung auf Nickelbasis besteht.

3. Vorrichtung (52) nach Anspruch 1 oder 2, **dadurch gekennzeichnet, dass** die Legierung auf Nickelbasis mindestens ein Element umfasst, ausgewählt aus Chrom, Eisen, Mangan, Kupfer, Niob und Molybdän.

4. Vorrichtung (52) nach Anspruch 3, **dadurch gekennzeichnet, dass** die Legierung auf Nickelbasis Eisen umfasst.

5. Vorrichtung (52) nach Anspruch 4, **dadurch gekennzeichnet, dass** der Eisengehalt kleiner oder gleich 10 % des Gewichts der Legierung ist.

6. Vorrichtung (52) nach Anspruch 4 oder 5, **dadurch gekennzeichnet, dass** die Legierung auf Nickelbasis Eisen und Chrom umfasst.

7. Vorrichtung (52) nach Anspruch 6, **dadurch gekennzeichnet, dass** die Legierung auf Nickelbasis ausgewählt ist aus a) einer Legierung, die mindestens 72 Gew.-% Nickel, 14 bis 17 Gew.-% Chrom und 6 bis 10 Gew.-% Eisen umfasst, b) einer Legierung, die mindestens 58 Gew.-% Nickel, 20 bis 23 Gew.-% Chrom und einen Eisengehalt von kleiner oder gleich 5 Gew.-% umfasst, und c) einer Legierung, die 50 bis 55 Gew.-% Nickel und 17 bis 21 Gew.-% Chrom umfasst.

8. Vorrichtung (52) nach einem der Ansprüche 1 bis 4, **dadurch gekennzeichnet, dass** die Legierung auf Nickelbasis in Gewichtsprozent 24 bis 26 % Chrom, 0,15 bis 0,25 % Kohlenstoff, 1,8 bis 2,4 % Aluminium, 0,1 bis 0,2 % Titan, 0,05 bis 0,12 % Yttrium, 0,01 bis 0,10 % Zirkonium, höchstens 0,15 % Mangan, höchstens 0,5 % Silizium, höchstens 0,1 % Kupfer, 8 bis 11 % Eisen umfasst, wobei der Rest Nickel ist.

9. Vorrichtung (52) nach einem der Ansprüche 1 bis 4, **dadurch gekennzeichnet, dass** die Legierung auf Nickelbasis in Gewichtsprozent 16 % Chrom, 4,5 % Aluminium, 3 % Eisen, höchstens 2 % Kobalt, höchstens 0,5 % Mangan, höchstens 0,5 % Molybdän, höchstens 0,5 % Titan, höchstens 0,5 % Wolfram, höchstens 0,15 % Niob, höchstens 0,2 % Silizium, höchstens 0,1 % Zirkonium, 0,04 % Kohlenstoff, höchstens 0,01% Bor, 0,01% Yttrium umfasst, wobei der Rest Nickel ist.

10. Vorrichtung (52) nach einem der Ansprüche 1 bis 4, **dadurch gekennzeichnet, dass** die Legierung auf Nickelbasis in Gewichtsprozent 22 % Chrom, 14 % Wolfram, 2 % Molybdän, höchstens 3 % Eisen, höchstens 5 % Kobalt, 0,5 % Mangan, 0,4 % Silizium, höchstens 0,5 % Niob, 0,3 % Aluminium, höchstens 0,1 % Titan, 0,1 % Kohlenstoff, 0,02 % Lanthan, höchstens 0,015 % Bor umfasst, wobei der Rest Nickel ist.

11. Elektrisches Triebwerk (10), **dadurch gekennzeichnet, dass** es eine Vorrichtung (52) nach einem der Ansprüche 1 bis 10 umfasst.

12. Elektrisches Triebwerk (10) nach Anspruch 11, **dadurch gekennzeichnet, dass** es ein Hall-Effekt-Strahltriebwerk ist.

13. Satellit, **dadurch gekennzeichnet, dass** er ein elektrisches Triebwerk (10) nach Anspruch 11 oder 12 umfasst.

## Claims

1. Device (52) for regulating rate of flow of propellant fluid for an electric thruster, of a thermo-capillary device type comprising at least one capillary duct that is electrically conductive and capable of regulating the rate of flow of propellant fluid under the action of a change in temperature of the duct, said at least one capillary duct being connected to an electric current source such that such electric current passing through the capillary duct causes heating of the capillary duct by Joule effect, said at least one capillary duct comprising a nickel-based alloy.

2. Device (52) according to claim 1, **characterised in that** said at least one capillary duct consists of a nickel-based alloy.

3. Device (52) according to claim 1 or 2, **characterised in that** the nickel-based alloy comprises at least one element selected from chromium, iron, manganese, copper, niobium and molybdenum.

4. Device (52) according to claim 3, **characterised in that** the nickel-based alloy comprises iron.

5. Device (52) according to claim 4, **characterised in that** the iron content is less than or equal to 10% of the weight of the alloy.

6. Device (52) according to claim 4 or 5, **characterised in that** the nickel-based alloy comprises iron and chromium.

7. Device (52) according to claim 6, **characterised in that** the nickel-based alloy is selected from a) an alloy comprising at least 72% by weight of nickel, from 14 to 17% by weight of chromium and from 6 to 10% by weight of iron, b) an alloy comprising at least 58% by weight of nickel, from 20 to 23% by weight of chromium and an iron content less than or equal to 5% by weight, and c) an alloy comprising from 50 to 55% by weight of nickel and from 17 to 21% by weight of chromium.

8. Device (52) according to one of claims 1 to 4, **characterised in that** the nickel-based alloy comprises, as a percentage by weight, from 24 to 26% of chromium, from 0.15 to 0.25% of carbon, from 1.8 to 2.4% by aluminium, from 0.1 to 0.2% of titanium, from 0.05 to 0.12% of yttrium, from 0.01 to 0.10% of zirconium, at most 0.15% of manganese, at most 0.5% of silicon, at most 0.1% of copper, from 8 to 11% of iron, the remainder being nickel.

9. Device (52) according to one of claims 1 to 4, **characterised in that** the nickel-based alloy comprises, as a percentage by weight, 16% of chromium, 4.5% of aluminium, 3% of iron, at most 2% of cobalt, at most 0.5% of manganese, at most 0.5% of molybdenum, at most 0.5% of titanium, at most 0.5% of tungsten, at most 0.15% of niobium, at most 0.2% of silicon, at most 0.1% of zirconium, 0.04% of carbon, at most 0.01% of boron, 0.01% of yttrium, the remainder being nickel.

10. Device (52) according to one of claims 1 to 4, **characterised in that** the nickel-based alloy comprises, as a percentage by weight, 22% of chromium, 14% of tungsten, 2% of molybdenum, at most 3% of iron, at most 5% of cobalt, 0.5% of manganese, 0.4% of silicon, at most 0.5% of niobium, 0.3% of aluminium, at most 0.1% of titanium, 0.1% of carbon, 0.02% of lanthanum, at most 0.015% of boron, the remainder being nickel.

11. Electric thruster (10), **characterised in that** it comprises a device (52) according to one of claims 1 to 10.

12. Electric thruster (10) according to claim 11, **characterised in that** it is a Hall effect plasma thruster.

13. Satellite, **characterised in that** it comprises an electric thruster (10) according to claim 11 or 12.
